# EUROPEAN PATENT APPLICATION

(11) **EP 1 690 836 A1**
(43) Date of publication of application: **16.08.2006**
(21) Application number: 04818962.5
(22) Date of filing: 18.11.2004
(51) Int. Cl.: C03B 37/012

(54) **METHOD AND DEVICE FOR CONNECTING OPTICAL FIBER MATRIX AND OPTICAL FIBER**

(30) Priority: 19.11.2003 JP 2003389811
(71) Applicant: Shin-Etsu Chemical Co., Ltd., Chiyoda-ku, Tokyo 100-0004 (JP)
(72) Inventor: KUME, Hiroyuki, c/o Shin-Etsu Chemical Co., Ltd, Gunma 379-0224 (JP); YAMAMURA, Waichi,2c/o Shin-Etsu Chemical Co., Ltd, Gunma 379-0224 (JP)
(74) Representative: Pfenning, Meinig & Partner GbR
(86) International application number: PCT/JP2004/017197
(87) International publication number: WO 2005/049514

(57) **Abstract**

An object of the present invention is to provide an optical fiber base material and a connection processing method and apparatus capable of simply connecting ends of an optical fiber base material and a dummy member with a large diameter at short times without breaking and crack in a connected portion when heating and melting the ends of them to weld and connect both. A connection processing method of an optical fiber base material 1 for heating and melting ends of an optical fiber base material 1 and a dummy member 2 or ends of two optical fiber base materials 1 or ends of two dummy members 2 to weld and connect both. The connection processing method includes: gripping an end of at least one of the bodies to be welded with gripping mechanism to face both with each other; selecting the interval between both the bodies to be welded within 1 to 20mm; and heating and melting ends of both the bodies to be welded to weld and connect both.

## Description

### TECHNICAL FIELD

The present invention relates to a connection processing method and apparatus of an optical fiber base material for heating and melting ends of welded bodies such as an optical fiber base material and a dummy member to weld and connect both ends, and an obtained optical fiber base material.

The present application also relates to the following application, the contents of which are incorporated herein by reference if applicable.
A Japanese Patent Application No. 2003-389811
Filed on November 19, 2003.

### BACKGROUND ART

An optical fiber base material is manufactured by dehydrating and sintering a porous base material that is a precursor thereof and transparently vitrifying the dehydrated and sintered porous base material. After that, if required, there are performed a process for modifying a bend by means of a glass lathe, a process for heating and elongating the base material to predetermined outside diameter and length, and a flame grinding process for removing an unevenness and scratch of a surface, impurities, or the like.

When processing an optical fiber base material by means of a glass lathe, a desired processing is performed on the optical fiber base material after connecting a dummy member to both ends of the optical fiber base material and gripping the dummy member with a chuck to set them on the glass lathe. Conventionally, when connecting such an optical fiber base material and a dummy member, ends of both have been heated and melted by burner flames and then both ends have been abutted and connected with each other (see Patent Document 1).

However, some of an optical fiber base material and dummy member connected in this way may be extremely rarely broken in a connected portion between the optical fiber base material and the dummy member, and the optical fiber base material may fall and be damaged in the worst case. Since the optical fiber base material is heated at high-temperature of 1,500 to 2,200□ during processing the optical fiber base material, the fall of optical fiber base material is dangerous for a worker.

Since the diameter of optical fiber base material increases recently, a production cost rises when an optical fiber base material is damaged due to breaking. Moreover, although an optical fiber base material is cracked without being broken, the next process cannot be performed if a cracked portion is not removed. Thus, there is a problem that a working hour gets longer.

Since minute bubbles enter into a connected portion when welding and connecting an optical fiber base material and a dummy member and residual distortion occurs with a central focus on such bubbles in cooling, it is considered that breaking and crack occur in the connected portion.

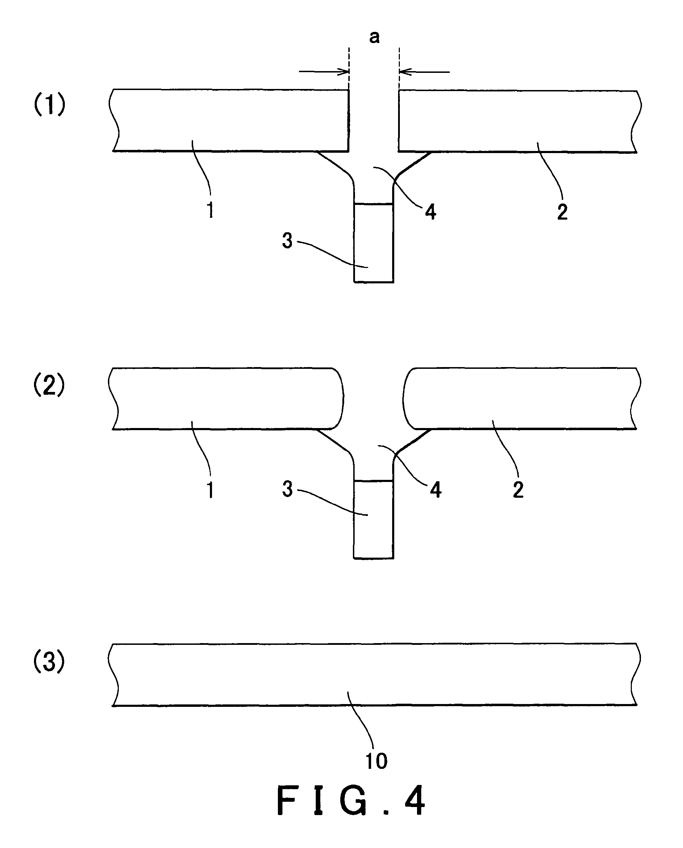

Conventionally, a method as shown in Fig. 4 has been adopted in order to weld and connect a dummy member to an optical fiber base material. That is, according to this method, an optical fiber base material 1 and a dummy rod 2 are separated by a distance a and are heated by a flame 4 of a burner 3, and thus are melted and softened to be welded and connected.

Since this method has changed the interval of connected portion and the flame amount of burner by perception and experience of a worker, the melting and softening time of connected portion is different according to workers and for each work. Therefore, a work is inefficient and an optical fiber connecting base material 10 with a good quality cannot always be obtained stably.

Furthermore, since a strong burner flame is used and a peripheral border is heated more than a center of an end face of a connected portion with the increase of diameter of an optical fiber base material, the peripheral border is early softened and rises up circularly by surface tension. Thus, there has increased frequency that a dent occurs at the central portion and a part of gas enters the dent during connecting to remain behind as bubbles.

Moreover, Patent Document 1 discloses a method for heating and melting ends of an optical fiber base material and a dummy member to weld and connect them after machining both ends in a convex shape when welding and connecting them. According to this method, since a center and a peripheral border of an end face of a connected portion are heated similarly, the peripheral border does not rise up circularly. Therefore, it is possible to remove bubbles generated in the connected portion in welding and thus repress residual distortion generated in the connected portion.
[Patent Document 1] Japanese Patent Application Publication No. 2000-327358

### DISCLOSURE OF THE INVENTION

### PROBLEMS TO BE SOLBED BY THE INVENTION

However, due to the increase of diameter of an optical fiber base material, time has been required to perform machining for forming the connected portion in a convex shape. The machining time can be shortened when the height (an axial direction) of convex shape is reduced. However, the rising-up of peripheral border in heating and melting cannot be repressed. On the other hand, when the height of convex shape becomes high, there has been a problem that a cost increases due to the increase of machining time and a taper hem protrudes out from a flame not to be softened due to insufficient heating. Therefore, an end face of a connected portion requires a convex shape of which machining time is as short as possible and the height is as high as possible and that has the height capable of being sufficiently softened up to a taper hem.

Therefore, it is an object of the present invention to provide an optical fiber base material, a connection processing method, and a connection processing apparatus capable of simply connecting an optical fiber base material and a dummy member at short times without breaking and crack in a connected portion when heating and melting ends of the optical fiber base material and the dummy member with a large diameter to weld and connect both.

### MEANS FOR SOLVING THE PROBLEMS

There is provided a connection processing method of an optical fiber base material for heating and melting ends of an optical fiber base material and a dummy member or ends of two optical fiber base materials or ends of two dummy members to weld and connect both. The connection processing method includes: gripping an end of at least one of the bodies to be welded with gripping mechanism to face both with each other; selecting the interval between both the bodies to be welded within 1 to 20mm; and heating and melting ends of both the bodies to be welded to weld and connect both.

In addition, the connection processing method may further include machining the end of at least one of the bodies to be welded to form the end in a convex shape. The height of convex shape of the end may be a height going into a heating area of the burner.

The connection processing method may include: detecting the interval between the ends of both bodies to be welded by means of a detector during heating; controlling the gripping mechanism by means of a gripping mechanism position control apparatus to hold the interval between both according to the transformation of ends by heating; and allowing both to come into contact with each other after that to weld and connect both.

There is provided a connection processing apparatus of an optical fiber base material for heating and melting ends of an optical fiber base material and a dummy member or ends of two optical fiber base materials or ends of two dummy members to weld and connect both. The connection processing apparatus includes: gripping mechanism that grips an end of a body to be welded; a distance detector that detects a distance between both bodies to be welded; and a gripping mechanism position control apparatus that controls the gripping mechanism to hold the distance between both bodies to be welded constant.

An optical fiber base material of the present invention is formed by the connection processing method of an optical fiber base material or the connection processing apparatus of an optical fiber base material.

Furthermore there is provided a connection processing apparatus that welds and connects an end of an optical fiber base material and an end of a dummy member. The apparatus includes: gripping mechanism that grips the end of the optical fiber base material and the end of the dummy member at a position at which both ends are faced with each other; a burner that heats and dissolves the end of the optical fiber base material and the end of the dummy member; a distance detector that detects a distance between the end of the optical fiber base material and the end of the dummy member gripped by the gripping mechanism to be faced with each other; and gripping mechanism position control mechanism that controls the gripping mechanism so that the distance detected by the distance detector is within a predetermined range and the end of the optical fiber base material and the end of the dummy member hold the separated position, until the burner at least heats and dissolves the end of the optical fiber base material and the end of the dummy member.

In the connection processing apparatus, the gripping mechanism position control mechanism may control the gripping mechanism so that the end of the optical fiber base material and the end of the dummy member are located within a range to which a flame of the burner extends as the predetermined range.

In the connection processing apparatus, the gripping mechanism position control mechanism may control the gripping mechanism in order to weld and connect the end of the optical fiber base material and the end of the dummy member after the burner heats and dissolves the end of the optical fiber base material and the end of the dummy member.

In the connection processing apparatus, the end of the optical fiber base material and the end of the dummy member may have a convex shape of which a tip is thin, and the gripping mechanism position control mechanism may control the gripping mechanism so that the convex shape of the optical fiber base material and the convex shape of the dummy member are located within a range to which a flame of the burner extends as the predetermined range.

In the connection processing apparatus, the gripping mechanism position control mechanism may control the gripping mechanism in order to weld and connect the convex shape of the optical fiber base material and the convex shape of the dummy member after the burner heats and dissolves the convex shape of the optical fiber base material and the convex shape of the dummy member.

The summary of the invention does not necessarily describe all necessary features of the present invention. The present invention may also be a sub-combination of the features described above.

### EFFECT OF THE INVENTION

According to an optical fiber base material and a connection processing method and apparatus of the present invention, since connected faces of both are close to each other and thus radiative cooling is hard to be generated from these faces, it is possible to efficiently heat ends and produce an optical fiber connecting base material having a uniform quality. Furthermore, since radiative cooling is hard to be generated from a central portion of an end of a connected portion and thus a temperature difference between the central portion and a peripheral border is reduced, it is possible to restrain particularly only the peripheral border from rising up circularly due to surface tension by melting and easily weld and connect an optical fiber base material and a dummy member with a large diameter or optical fiber base materials without entering of bubbles causing breaking or the like into a connected portion.

Moreover, since there is not required monitoring to prevent a worker from contacting with a connected portion before welding, it is possible to liberate a worker from high heat environment.

### BRIEF DESCRIPTION OF THE DRAWINGS

Fig. 1 is a schematic view showing a configuration of a connection processing apparatus of the present invention.
Fig. 2 (1) to (3) are schematic views exemplary explaining a connection processing method of the present invention.
Fig. 3 (1) to (3) are schematic views explaining another example of a connection processing method of the present invention.
Fig. 4 (1) to (3) are schematic views explaining a connection processing method of Comparative Example 1.
Fig. 5 (1) to (4) are schematic views explaining a connection processing method of Comparative Example 2.

### DESCRIPTION OF REFERENCE NUMERALS

1...optical fiber base material
2...dummy member
3...burner
4...flame
5...bearing chamfer
6...distance detector
7...optical fiber gripping mechanism
8...dummy gripping mechanism
9...gripping mechanism position control mechanism
10...optical fiber connecting base material

### BEST MODE FOR CARRYING OUT THE INVENTION

The invention will now be described based on the preferred embodiments, which do not intend to limit the scope of the present invention, but exemplify the invention. All of the features and the combinations thereof described in the embodiment are not necessarily essential to the invention.

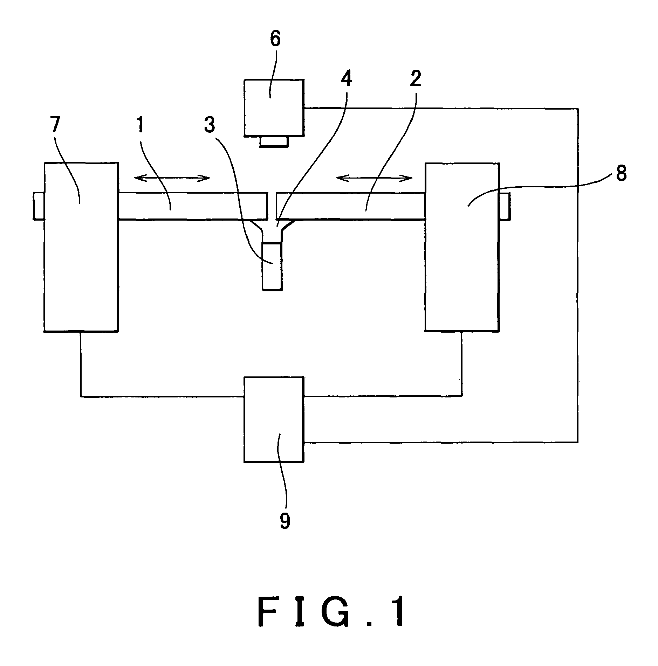

Fig. 1 is a schematic view exemplary showing a configuration of a connection processing apparatus of an optical fiber base material of the present invention. As shown in a present drawing, both ends of an optical fiber base material 1 and a dummy member 2 that are faced with each other are heated and melted by a flame 4 of a burner 3. With the advance of heating and melting, both ends are transformed by surface tension and thus the distance between the ends of both varies. At this time, when both are in contact with each other, both are hard to be welded and connected in axial symmetry and bubbles are easy to be generated. Therefore, until both ends are connected to each other, it is necessary to hold the interval between both by 1mm to 20mm, more preferably, 2mm to 10mm. For this reason, an optical fiber base material gripping mechanism 7 or a dummy member gripping mechanism 8 is automatically controlled by a gripping mechanism position control apparatus 9 so that the interval between the optical fiber base material 1 and the dummy member 2 is monitored by means of a distance detector 6 such as a camera and the interval between both varying with the advance of heating and melting is held constant.

In addition, the dummy member includes a dummy rod, a dummy tube, or the like consisting of a quartz glass.

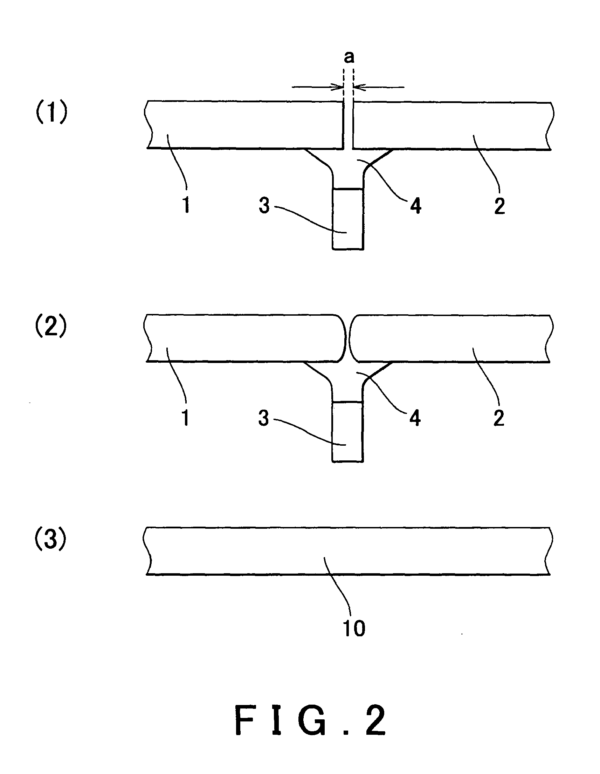

Fig. 2 shows the case where an optical fiber base material and a dummy member on which a connection process is performed have the same outside diameter. The optical fiber base material 1 and the dummy member 2 before they are heated and melted are arranged so that the interval a between ends is 1mm to 20mm, preferably, 2mm to 10mm (see Fig. 2(1)). In this case, for example, the optical fiber base material 1 is gripped by one chuck of a glass lathe and simultaneously the dummy member 2 is gripped by the other chuck, and both are heated by the burner 3 while being rotated at the same speed. When both ends are sufficiently softened, it is preferable to allow both to come into contact with each other to weld and connect both (see Fig. 2(2)). In this way, there is obtained an optical fiber connecting base material 10 made by welding and connecting the optical fiber base material 1 and the dummy member 2 without entering of bubbles causing breaking or the like into a connected portion (see Fig. 2(3)).

As further another example of the present invention, a connection processing apparatus has optical fiber gripping mechanism 7 and dummy gripping mechanism 8, a burner 3, a distance detector 6, and a gripping mechanism position control section 9, similarly to the connection processing apparatus showed in Fig. 1. The optical fiber gripping mechanism 7 grips an end of an optical fiber base material 1, and the dummy gripping mechanism 8 grips an end of a dummy member 2 at the position at which the end is faced with the end of the optical fiber base material 1. The burner 3 heats and dissolves the end of the optical fiber base material 1 and the end of the dummy member 2. The distance detector 6 detects a distance between the end of the optical fiber base material 1 and the end of the dummy member 2, which are gripped by the optical fiber gripping mechanism 7 and the dummy gripping mechanism 8 to be faced with each other.

The gripping mechanism position control mechanism 9 controls the optical fiber gripping mechanism 7 and the dummy gripping mechanism 8 so that the distance detected by the distance detector 6 is within a predetermined range and the end of the optical fiber base material 1 and the end of the dummy member 2 hold the separated position, until the burner 3 at least heats and dissolves the end of the optical fiber base material 1 and the end of the dummy member 2. Moreover, the gripping mechanism position control mechanism 9 may controls the optical fiber gripping mechanism 7 and the dummy gripping mechanism 8 in order to weld and connect the end of the optical fiber base material 1 and the end of the dummy member 2 after the burner 3 heats and dissolves the end of the optical fiber base material 1 and the end of the dummy member 2 to soften both adequately. Here, a predetermined range may be, e.g., 1mm to 20mm. Moreover, the gripping mechanism position control mechanism 9 may previously store time required for the burner 3 to heat and dissolve the end of the optical fiber base material 1 and the end of the dummy member 2, separate the end of the optical fiber base material 1 from the end of the dummy member 2 until the time elapses, and connect them after the lapse of time. Moreover, as another example, the connection processing apparatus has a temperature sensing means. The connection processing apparatus may separate the end of the optical fiber base material 1 from the end of the dummy member 2 until the dissolution of the end of the optical fiber base material 1 and the end of the dummy member 2 is detected by the temperature sensing means, and connect them after the dissolution is detected.

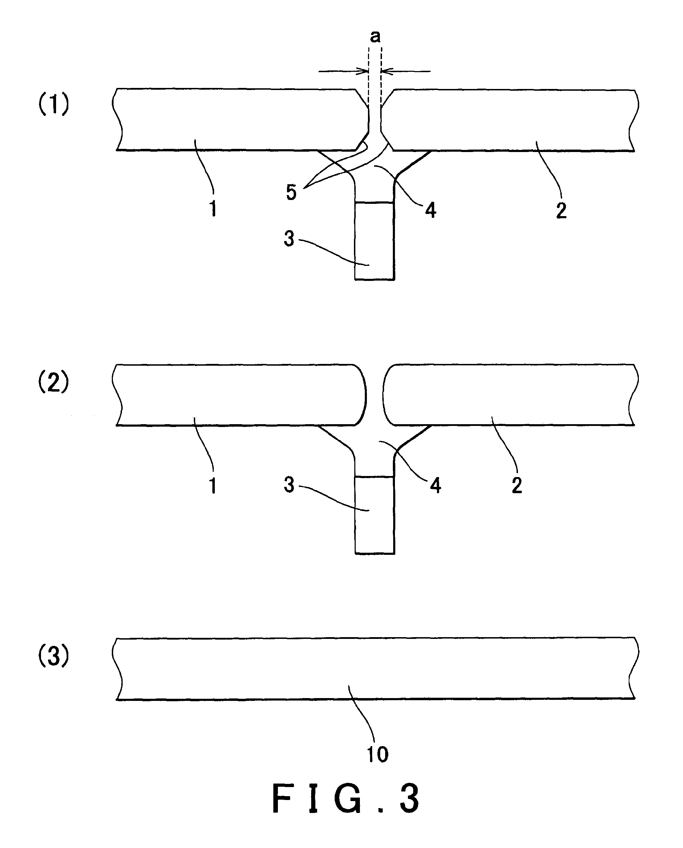

Moreover, as shown in Figs. 2 and 3, when the end of the optical fiber base material 1 and the end of the dummy member 2 have a convex shape of which a tip is thin, the gripping mechanism position control mechanism 9 may control the optical fiber gripping mechanism 7 and the dummy gripping mechanism 8 so that the convex shape of the optical fiber base material 1 and the convex shape of the dummy member 2 are located within a range to which a flame of the burner 3 extends as the predetermined range. In this case, the gripping mechanism position control mechanism 9 may control the gripping mechanism 8 in order to weld and connect the convex shape of the optical fiber base material 1 and the convex shape of the dummy member 2 after the burner 3 heats and dissolves the convex shape of the optical fiber base material 1 and the convex shape of the dummy member 2.

Fig. 3 shows another aspect of a connection processing method according to the present invention.

Opposed ends of the optical fiber base material 1 and the dummy member 2 are machined in a convex shape, and then are arranged at intervals of 1mm to 20mm, preferable, 2mm to 10mm. The height of the convex shape formed on each end in an axial direction is within a range that is covered by a flame 4 of the burner 3 (Fig. 3(1)). This convex shape is formed in the shape of a bearing chamfer 5 made by machining the end using a bearing chamfer process. Both ends are heated and melted to be softened adequately (Fig. 3(2)). After that, there is obtained an optical fiber connecting base material 10 made by welding and connecting the optical fiber base material 1 and the dummy member 2 by allowing both ends to come into contact with each other without entering bubbles causing breaking or the like into a connected portion (Fig. 3(3)).

In the aspect shown in Fig. 3, although any of both ends is machined in a convex shape, at least one end of opposed ends may be machined in a convex shape. As a result, since rising-up of a peripheral border having a convex shape is at least restrained, it is possible to remove fine bubbles that have conventionally been generated in a connected portion during welding. Therefore, there is obtained an effect controlling residual distortion generated in a connected portion.

In addition, in the present invention, when using a burner as a heating means, since a central portion and a peripheral border of a connected end are simultaneously heated if a convex taper hem of an end is within a range to be heated by a flame, the whole of connected end can be softened.

Next, it will be described about Embodiments 1 and 2 and Comparative Examples 1 and 2 of the present invention.

### (Embodiment 1)

A connection process was performed on the optical fiber base material 1 and the dummy member 2, which have a diameter of 70mm, in a method of the present invention as shown in Fig. 2. It was assumed that the interval a between the ends of the optical fiber base material 1 and the dummy member 2 is 2mm (Fig. 2(1)). Both ends were heated by the oxyhydrogen burner 3 in an amount of hydrogen of 300L/mm for six minutes. As a result, both ends could be adequately melted and softened (Fig. 2(2)), and be welded and connected (Fig. 2(3)). Similarly, ten optical fiber connecting base materials 10 made by welding and connecting the optical fiber base material and the dummy member were manufactured by repeating the connection process.

All were completely welded and connected without fine bubbles and crack in a connected portion. When tensile force corresponding to four times of tensile force during elongation processing was added to these optical fiber connecting base materials 10 in a normal glass lathe, breaking and crack did not occur.

### (Embodiment 2)

A connection process was performed on the optical fiber base material 1 and the dummy member 2, which have a diameter of 85mm, in a method of the present invention as shown in Fig. 3. The bearing chamfer 5 having 25mm in an end face direction and 14mm in an axial direction was respectively performed on both ends of the optical fiber base material 1 and the dummy member 2. It was assumed that the interval a between the both ends is 2mm. At this time, the interval between peripheries of taper hems is 38mm. Both ends were heated by the oxyhydrogen burner 3 in an amount of hydrogen of 500L/mm. As a result, the flame 4 of the burner 3 covered the taper hems completely (Fig. 3(1)). Both ends were heated for nine minutes, and thus could be adequately melted and softened (Fig. 3(2)), and welded and connected (Fig. 3(3)). Similarly, ten optical fiber connecting base materials 10 were manufactured.

All were completely welded and connected without fine bubbles and crack in a connected portion. When tensile force corresponding to four times of tensile force during elongation processing was added to these optical fiber connecting base materials 10 in a normal glass lathe, breaking and crack did not occur.

### (Comparative Example 1)

A connection process was performed on the optical fiber base material 1 and the dummy member 2, which have a diameter of 70mm, in a method as shown in Fig. 4. It was assumed that the interval a between both ends is 30mm (Fig. 4(1)). Both ends were heated by the oxyhydrogen burner 3 in an amount of hydrogen of 300L/mm for six minutes. As a result, both ends could not be adequately melted and softened (Fig. 4(2)), but be welded and connected (Fig. 4(3)). However, breaking occurred in a connected portion after cooling. Similarly, ten optical fiber connecting base materials 10 were manufactured.

When tensile force corresponding to four times of tensile force during elongation processing was added to the manufactured optical fiber connecting base materials 10 in a normal glass lathe, breaking and crack occurred in four base materials among ten base materials.

### (Comparative Example 2)

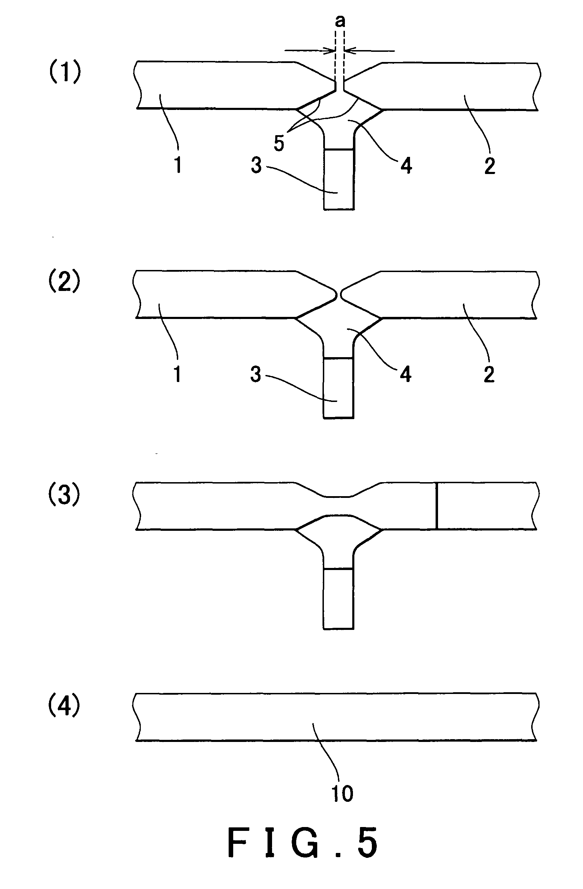

A connection process was performed on the optical fiber base material 1 and the dummy member 2, which have a diameter of 85mm, in a method as shown in Fig. 5. The bearing chamfer 5 having 25mm in an end face direction and 30mm in an axial direction was respectively performed on both ends of the optical fiber base material 1 and the dummy member 2. It was assumed that the interval a between the both ends is 2mm. At this time, the interval between peripheries of taper hems is 70mm. Both ends were heated by the oxyhydrogen burner 3 in an amount of hydrogen of 500L/mm. As a result, a part of the taper hem protruded from the flame 4 of the burner 3 (Fig. 5(1)). Both ends were heated for nine minutes, and thus the central portion could be melted and softened (Fig. 5(2)), and welded and connected (Fig. 5(3)). However, the taper hem was not adequately softened. Thus, the taper hem had to be welded by degrees while being further heated for ten minutes (Fig. 5(4)). Similarly, ten optical fiber connecting base materials 10 were manufactured.

A connected portion had not fine bubbles. However, there was required a working hour not less than two times compared to the method of Embodiment 2. When tensile force corresponding to four times of tensile force during elongation processing was added to the manufactured optical fiber connecting base materials 10 in a normal glass lathe, breaking and crack did not occur.

### INDUSTRIAL APPLICABILITY

Although the present invention has been described by way of an exemplary embodiment, it should be understood that those skilled in the art might make many changes and substitutions without departing from the spirit and the scope of the present invention. It is obvious from the definition of the appended claims that embodiments with such modifications also belong to the scope of the present invention.

## Claims

1. A connection processing method of an optical fiber base material for heating and melting ends of an optical fiber base material and a dummy member or ends of two optical fiber base materials or ends of two dummy members to weld and connect both, the connection processing method comprising:
gripping an end of at least one of the bodies to be welded with gripping mechanism to face both with each other;
selecting the interval between both the bodies to be welded within 1 to 20mm; and
heating and melting ends of both the bodies to be welded to weld and connect both.

2. The connection processing method of an optical fiber base material as claimed in claim 1, further comprising machining the end of at least one of the bodies to be welded to form the end in a convex shape.

3. The connection processing method of an optical fiber base material as claimed in claim 2, wherein
means for heating and melting the end of body to be welded is a burner, and
the height of convex shape of the end is a height going into a heating area of the burner.

4. The connection processing method of an optical fiber base material as claimed in any one of claims 1 to 3, further comprising:
detecting the interval between the ends of both bodies to be welded by means of a detector;
controlling the gripping mechanism by means of a gripping mechanism position control apparatus to hold the interval between both according to the transformation of ends by heating; and
allowing both to come into contact with each other after that to weld and connect both.

5. A connection processing apparatus of an optical fiber base material for heating and melting ends of an optical fiber base material and a dummy member or ends of two optical fiber base materials or ends of two dummy members to weld and connect both, the connection processing apparatus comprising:
gripping mechanism that grips an end of a body to be welded;
a distance detector that detects a distance between both bodies to be welded; and
a gripping mechanism position control apparatus that controls said gripping mechanism to hold the distance between both bodies to be welded constant.

6. An optical fiber base material that is formed by the connection processing method of an optical fiber base material as claimed in any one of claims 1 to 4.

7. An optical fiber base material that is formed by the connection processing apparatus of an optical fiber base material as claimed in claim 5.

8. A connection processing apparatus that welds and connects an end of an optical fiber base material and an end of a dummy member, comprising:
gripping mechanism that grips the end of the optical fiber base material and the end of the dummy member at a position at which both ends are faced with each other;
a burner that heats and dissolves the end of the optical fiber base material and the end of the dummy member;
a distance detector that detects a distance between the end of the optical fiber base material and the end of the dummy member gripped by said gripping mechanism to be faced with each other; and
gripping mechanism position control mechanism that controls said gripping mechanism so that the distance detected by said distance detector is within a predetermined range and the end of the optical fiber base material and the end of the dummy member hold the separated position, until said burner at least heats and dissolves the end of the optical fiber base material and the end of the dummy member.

9. The connection processing apparatus as claimed in claim 8, wherein said gripping mechanism position control mechanism controls said gripping mechanism so that the end of the optical fiber base material and the end of the dummy member are located within a range to which a flame of said burner extends as the predetermined range.

10. The connection processing apparatus as claimed in claim 9, wherein said gripping mechanism position control mechanism controls said gripping mechanism in order to weld and connect the end of the optical fiber base material and the end of the dummy member after said burner heats and dissolves the end of the optical fiber base material and the end of the dummy member.

11. The connection processing apparatus as claimed in claim 8, wherein
the end of the optical fiber base material and the end of the dummy member have a convex shape of which a tip is thin, and
said gripping mechanism position control mechanism controls said gripping mechanism so that the convex shape of the optical fiber base material and the convex shape of the dummy member are located within a range to which a flame of said burner extends as the predetermined range.

12. The connection processing apparatus as claimed in claim 11, wherein said gripping mechanism position control mechanism controls said gripping mechanism in order to weld and connect the convex shape of the optical fiber base material and the convex shape of the dummy member after said burner heats and dissolves the convex shape of the optical fiber base material and the convex shape of the dummy member.
